# EUROPÄISCHE PATENTSCHRIFT

(11) **EP 1 474 616 B1**
(45) Veröffentlichungstag und Bekanntmachung des Hinweises auf die Patenterteilung: **11.10.2006**
(21) Anmeldenummer: 03739381.6
(22) Anmeldetag: 29.01.2003
(51) Int. Cl.: F16C 17/10, F16C 17/26, F16C 33/10, F04B 1/12, F16C 23/04

(54) **DREHGLEITLAGER**
ROTATION-SLIDE BEARING
PALIER LISSE DE PIVOTEMENT

(30) Priorität: 15.02.2002 DE 10206381; 08.05.2002 DE 10220611
(43) Veröffentlichungstag der Anmeldung: 10.11.2004
(73) Patentinhaber: Brueninghaus Hydromatik GmbH, 89275 Elchingen (DE)
(72) Erfinder: HOPPE, Stefan, 72172 Sulz am Neckar (DE)
(74) Vertreter: Körfer, Thomas
(86) Internationale Anmeldenummer: PCT/EP2003/000901
(87) Internationale Veröffentlichungsnummer: WO 2003/069173

(56) Entgegenhaltungen:
- DE-A- 3 510 389
- DE-C- 937 499
- DE-U- 1 860 860
- US-A- 3 043 636
- US-A- 3 746 410
- US-A- 6 017 184

## Beschreibung

Die Erfindung bezieht sich auf ein Drehgleitlager, insbesondere für eine Triebwelle einer Axialkolbenmaschine.

Wellen übertragen in den meisten Fällen Drehmomente, wobei sie hauptsächlich radialen Belastungen ausgesetzt sind und in Radiallagern zu lagern sind. Dabei treten auch kaum zu vermeidende Axialkräfte auf, die durch ein Axiallager für die Welle aufgenommen werden können. Bei einer Axialkolbenmaschine wird deren Triebwelle ganz erheblich axial belastet, weil die axial wirksamen Kolbenkräfte auf die Triebwelle übertragen werden. Deshalb ist die Triebwelle eine Axialkolbenmaschine sowohl radial als auch axial in belastbaren Wellenlagern zu lagern. Hierzu können Wälzlager oder Gleitlager dienen. Wälzlager zeichnen sich durch einen besonderen Leichtlauf aus, da ihr Reibungsverlust aufgrund der Rollreibung gering ist. Dagegen ist die Belastbarkeit eines Wälzlagers verhältnismäßig gering, da die Flächenpressung an den Wälzelementen hoch ist. Beim einem Gleitlager steht dagegen eine verhältnismäßig große Gleitfläche zu Verfügung, so daß die Flächenpressung gering gehalten werden kann. Deshalb eignen sich Gleitlager insbesondere für große Lagerlasten.

Um die Reibung und den Verschleiß bei einem Gleitlager gering zu halten, ist es aus der DE 43 36 915 A1 bekannt, in eine von zwei einander benachbarten Gleitflächen keilförmige Schmiermittel-Kissen zur Aufnahme eines Schmiermittels anzuordnen. Ein Durchfluß des Schmiermittels durch die Schmier-Kissen findet nicht statt.

Ein Drehgleitlager mit den Merkmalen des Oberbegriffs des Anspruchs 1 ist aus US 3 746 410 A bekannt.

Der Erfindung liegt die Aufgabe zugrunde, ein vorliegendes Drehgleitlager so auszugestalten, daß es radiale und axiale Kräfte aufzunehmen vermag und gute Gleiteigenschaften aufweist.

Diese Aufgabe wird durch die Merkmale des Anspruchs 1 gelöst. Vorteilhafte Weiterbildungen der Erfindung sind in den Unteransprüchen beschrieben.

Beim erfindungsgemäßen Drehgleitlager ist bzw. sind einem der beiden Lagerteile auf einer oder auf beiden Seiten jeweils eine Stützschulter mit einer Gleitfläche zugeordnet, an der das andere Lagerteil mit seiner der Stützschulter zugewandten Seitenfläche axial gestützt ist. Außerdem sind radial zwischen den Lagerteilen und axial zwischen dem einen Lagerteil und dem oder den benachbarten Stützschultern Schmiernuten angeordnet, wobei die jeweils wenigstens eine radial verlaufende Schmiernut und die wenigstens eine etwa axial verlaufende Schmiernut in den einander zugewandten Flächenbereichen in Verbindung miteinander stehen und auf wenigstens einer Seite des ersten Lagerteils oder des zweiten Lagerteils die wenigstens eine Schmiernut in eine Umfangsrichtung geneigt ist. Hierdurch ist ein kombiniertes Radial- und Axiallager geschaffen, das von einfacher und kleiner Bauweise ist, was durch die kombinierte Bauart erreicht wird. Dabei ist das erfindungsgemäße Drehgleitlager so ausgebildet daß es nur in eine Achsrichtung oder in beiden Achsrichtungen axial gestützt ist und als Axiallager ausgebildet ist. Deshalb eignet sich das erfindungsgemäße Drehlager auch als ein sogenanntes Festlager, das axiale und radiale Kräfte aufzunehmen vermag und in Kombination mit einem axial beabstandeten sogenannten Loslager angeordnet sein kann, das nur radiale Kräfte aufnimmt.

Aufgrund des Vorhandenseins der erfindungsgemäßen Schmiernuten ist das erfindungsgemäße Drehgleitlager im Betrieb bezüglich sowohl Radialkräften als auch Axialkräften gut geschmiert, wodurch Reibung und Verschleiß vermindert werden und eine lange Lebensdauer für das Lager erreicht wird. Aufgrund des radialen bzw. radial ansteigenden Verlaufs der wenigstens einen Schmiernut zwischen der Stützschulter und dem von ihm gestützten Lagerteil ergibt sich im Betrieb dann, wenn die Schmiernut im drehenden Lagerteil angeordnet ist, aufgrund der auf das Schmiermittel wirksamen Fliehkraft eine selbsttätig wirksame Pump- bzw. Förderwirkung, die das Schmiermittel veranlaßt, radial nach außen aus der Schmiernut auszutreten und neues Schmiermittel radial innen eintreten zu lassen, z. B. durch die vorhandene Gleitfuge oder durch eine besondere Zuführungsöffnung oder Zuführungsleitung. Von dieser selbsttätigen Schmiermittel-Ab- und Zuführung profitiert nicht nur die sich etwa radial erstreckende Schmiernut, sondern auch die sich etwa axial erstreckende Schmiernut, wenn sie mit der ersteren verbunden ist.

Eine forcierte Förderwirkung auf das Schmiermittel in der sich etwa axial erstreckenden Schmiernut läßt sich dann erreichen, wenn diese Schmiernut schräg angeordnet ist. Hierbei übt die mit dem Schmiermittel im Gleitkontakt stehende Gleitfläche eine in die Längsrichtung der Schmiernut gerichtete Förderkraftkomponente auf das Schmiermittel aus, wobei die Wirkrichtung von der Drehrichtung und davon abhängig ist, ob die Schmiernut sich im drehenden oder im nichtdrehenden Lagerteil befindet.

Die bereits beschriebene Förderwirkung im Bereich der wenigstens einen sich etwa radial erstreckenden Schmiernut läßt sich forcieren, wenn die Schmiernut so geneigt ist, daß das in der Schmiernut befindliche Schmiermittel aufgrund des Gleitkontaktes mit der Gleitfläche des benachbarten Bauteils im Sinne einer Kraftkomponente nach außen gefördert wird. Wenn die Schmiernut in dem im Betrieb drehenden Bauteil angeordnet ist, ist es vorteilhaft, die Schmiernut in die der Drehrichtung entgegengesetzte Richtung zu neigen. Wenn dagegen die Schmiernut im nichtdrehenden Bauteil angeordnet ist, ist es vorteilhaft, die Schmiernut in die Drehrichtung des benachbarten drehenden Bauteils zu neigen, um die vorbeschriebene forcierte Förderwirkung zu erhalten. Diese kann in zwei zu beiden Seiten des betreffenden Lagerteils angeordneten Schmiernuten erhalten werden, wenn die Schmiernuten einander entgegengesetzt geneigt sind und vorzugsweise durch eine axial oder schräg verlaufende Schmiernut miteinander verbunden sind. Es ist vorzugsweise das innere Lagerteil durch wenigstens einen seitlichen Stützflansch axial gestützt.

Weitere Weiterbildungsmerkmale der Erfindung beziehen sich darauf, das andere, insbesondere das äußere bzw. zweite, Lagerteil begrenzt kugelbeweglich zu lagern. Letzteres kann dadurch erfolgen, daß das zweite Lagerteil mit einer in einer Querebene angeordneten kugelabschnittförmigen Mantelfläche ausgebildet wird, mit der es in einer hohlkugelabschnittförmigen Ausnehmung eines dritten Lagerteils oder einer Gehäusewandung sitzt. Hierdurch wird zusätzlich zur wenigstens einseitigen axialen Abstützung ein kugelbewegliches Drehgleitlager geschaffen, daß z. B. durch Biegungen der zugehörigen Welle resultierende Fluchtungsfehler ausgleicht und dadurch das Lager vor Verschleiß und Überbeanspruchung schützt.

Andere Weiterbildungen der Erfindung beziehen sich darauf, daß Drehgleitlager bezüglich seiner Montierbarkeit bzw. Demontierbarkeit zu verbessern und einfach, kleine sowie funktionssichere Bauweisen langer Lebensdauer zu erhalten.

Nachfolgend werden vorteilhafte Ausgestaltungen des erfindungsgemäßen Drehgleitlagers anhand der Zeichnung (Figuren 11 bis 14) näher erläutert. Die Figuren 2 bis 10 zeigen Drehgleitlager, die nicht alle Merkmale des anspruchs 1 aufweisen. Es zeigt:
- Fig. 1: eine Axialkolbenmaschine im axialen Schnitt;
- Fig. 2: die in Fig. 1 mit II gekennzeichnete Einzelheit mit einem Drehgleitlager in vergrößerter Schnittdarstellung;
- Fig. 3: den Teilschnitt III-III in Fig. 2;
- Fig. 4: ein Drehgleitlager in perspektivischer Darstellung als Baugruppenteil, teilweise geschnitten;
- Fig. 5: das Drehgleitlager nach Fig. 4 in einer anderen Funktionsstellung;
- Fig. 6: das Drehgleitlager in einer Vormontagestellung;
- Fig. 7: ein äußeres Lagerteil des Drehgleitlagers im axialen Schnitt;
- Fig. 8: das Drehgleitlager in abgewandelter Ausgestaltung im axialen Schnitt;
- Fig. 9: das Drehgleitlager in weiter abgewandelter Ausgestaltung im axialen Schnitt;
- Fig 10: das Drehgleitlager in weiter abgewandelter Ausgestaltung im axialen Schnitt;
- Fig. 11: ein erfindungsgemäßes Drehgleitlager in abgewandelter Ausgestaltung in axialer Schnittdarstellung;
- Fig. 12: ein zweites und ein drittes Lagerteil des erfindungsgemäßen Drehgleitlagers in perspektivischer Darstellung;
- Fig. 13: einen Abschnitt des erfindungsgemäßen Drehgleitlagers in der Stirnansicht;
- Fig. 14: die in Fig. 1 mit XIV gekennzeichneten Einzelheit mit einem erfindungsgemäßen Gleitlager in abgewandelter Ausgestaltung und in vergrößerter Schnittdarstellung.

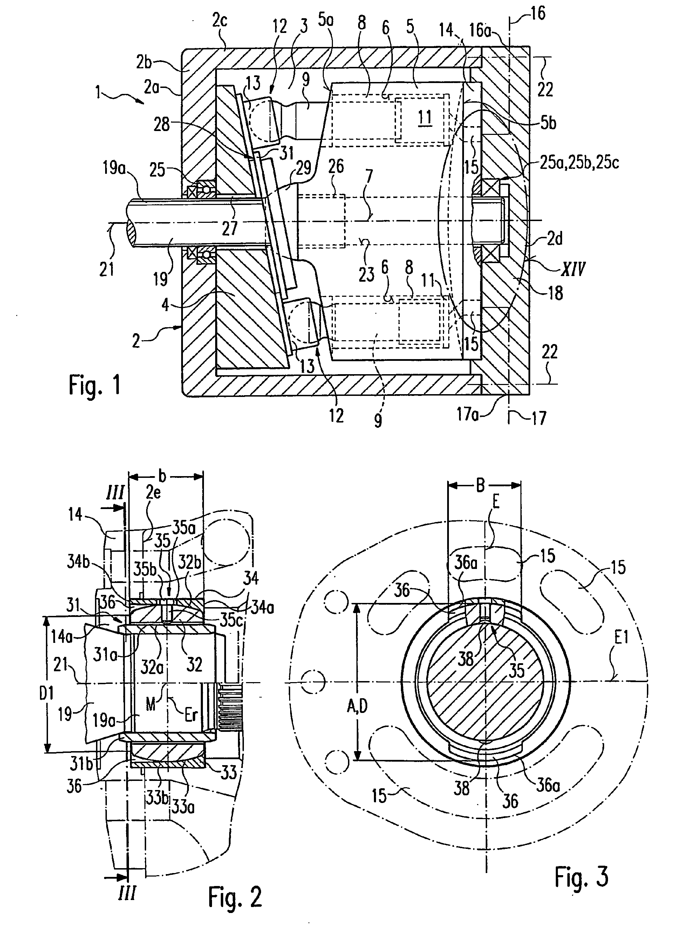

Die in Fig. 1 dargestellte, beispielhaft ausgebildete und in ihrer Gesamtheit mit 1 bezeichnete Kolbenmaschine weist ein Gehäuse 2 auf, in dessen Innenraum 3 eine Schrägscheibe 4 und eine Zylindertrommel 5 nebeneinander angeordnet sind. In der Zylindertrommel 5 sind auf dem Umfang verteilt Kolbenlöcher 6 angeordnet, die sich beim vorliegenden Ausführungsbeispiel einer Axialkolbenmaschine im wesentlichen parallel zu einer Mittelachse 7 der Zylindertrommel 5 erstrecken und an der der Schrägscheibe 4 zugewandten Stirnseite 5a der Zylindertrommel 5 offen sind.

In den Buchsenlöchern 6 sind Führungsbuchsen 8 fest eingesetzt, vorzugsweise eingepreßt.

In den Führungsbuchsen 8 sind vorzugsweise zylindrische Kolben 9 im wesentlichen axial verschiebbar gelagert, die mit ihren Kolbenköpfen Arbeitskammern 11 in der Zylindertrommel 5 in Richtung auf die Schrägscheibe 4 begrenzen. Die der Schrägscheibe 4 zugewandten Fußenden der Kolben 9 sind jeweils durch ein Gelenk 12 an der Schrägscheibe 4 abgestützt, wobei Gleitschuhe 13 vorhanden sein können, zwischen denen und den Fußenden die vorzugsweise als Kugelgelenke mit einem Kugelkopf und einer Kugelausnehmung ausgebildeten Gelenke 12 angeordnet sind.

Die Zylindertrommel 5 liegt mit ihrer der Schrägscheibe 4 abgewandten Stirnseite an einer Steuerscheibe 14 an, in der wenigstens zwei Steueröffnungen 15 in Form von nierenförmigen Durchgangslöchern angeordnet sind, die Abschnitte von einer angedeuteten Zuführungsleitung 16 und einer Abführungsleitung 17 bilden, die sich durch eine benachbarte Gehäusewand 18 erstrecken, an der die Steuerscheibe 14 gehalten ist. Die Zylindertrommel 5 ist auf einer Triebwelle 19 angeordnet, die drehbar im Gehäuse 2 gelagert ist und deren Drehachse 21 koaxial zur Mittelachse 7 der Zylindertrommel 5 verläuft.

Beim vorliegenden Ausführungsbeispiel ist das Gehäuse 2 aus einem topfförmigen Gehäuseteil 2a mit einem Gehäuseboden 2b und einer Umfangswand 2c sowie einem die Gehäusewand 18 bildenden Deckel oder Anschlußteil 2d gebildet, der bzw. das am freien Rand der Umfangswand 2c anliegt und damit durch andeutungsweise dargestellte Schrauben 22 verschraubt ist. Zur Verbindung der weiterführenden Zuführungs- und Abführungsleitungen 16, 17 sind am Anschlußteil 2d Leitungsanschlüsse 16a, 17a vorgesehen. Die Triebwelle 19, die die Zylindertrommel 5 in einer Lagerbohrung durchsetzt, ist in Lagerausnehmungen des Gehäusebodens 2b und des Deckels 2d mittels geeigneten Lagern 25, 25a drehbar gelagert und abgedichtet, wobei sie den Gehäuseboden 2b axial durchsetzt und mit einem Triebzapfen 19a vom Gehäuseboden 2b absteht.

Beim Ausführungsbeispiel der Kolbenmaschine 1 als Schrägscheibenmaschine ist die Zylindertrommel 5 durch eine Drehmitnahmeverbindung 26, z. B. eine Zahnkupplung, drehfest auf der Triebwelle 19 angeordnet, wobei diese die z. B. fest am Gehäuseboden 2 angeordnete oder darin ausgebildete Schrägscheibe 4 in einem Durchgangsloch 27 durchsetzt. Beim vorliegenden Ausführungsbeispiel rotiert im Funktionsbetrieb die Zylindertrommel 5 relativ zur Schrägscheibe 4, wobei die Kolben 9 längs in Richtung auf die Arbeitskammern 11 und zurück verschoben werden.

Beim Ausführungsbeispiel ist das hintere, in der Gehäusewand 18 bzw. im Anschlußteil 2d gelagerte Lager 25a ein Drehgleitlager 25b, das mit einem kugelbeweglichen Drehgleitlager 25c kombiniert ist, so daß es in der Lage ist, die Triebwelle 19 drehbar zu lagern und außerdem Mängel in der Flucht der Lager 25, 25a und/oder Durchbiegungen der Triebwelle 19, die im Funktionsbetrieb auftreten, auszugleichen. Hierdurch sind Verkantungen im Drehgleitlager 25b vermieden oder vermindert, was die Gleitfunktion verbessert, die Reibung und die Erwärmung im Drehgleitlager 25d vermindert und die Lebensdauer vergrößert.

Das in vorbeschriebener Weise kombinierte kugelbewegliche Drehgleitlager 25c weist ein inneres erstes Lagerteil 31 mit einer äußeren ersten Gleitfläche 31a auf, mit der es in einem äußeren zweiten Lagerteil 32 mit einer inneren zweiten Gleitfläche 32a mit Gleitspiel drehbar gelagert ist. Infolgedessen umgibt das äußere zweite Lagerteil 32 das innere erste Lagerteil 31, wobei das äußere zweite Lagerteil 32 zumindest an seinem Außenumfang als Ring mit einer kugelzonenförmigen äußeren dritten Lagerfläche 32b gebildet ist, mit der es begrenzt kugelbeweglich ist. D. h. es ist bezüglich der Drehachse 21 allseitig kippbar, in einem dritten Lagerteil 33 mit einer wenigstens teilweise entsprechend kugelabschnittförmig geformten inneren vierten Lagerfläche 33a gelagert.

Beim Ausführungsbeispiel sind das zweite Lagerteil 32 und das dritte Lagerteil 33 als Ringe ausgebildet, die z.B. eine gleichgroße axiale Breite b aufweisen können. Beim Ausführungsbeispiel ist das erste Lagerteil 31 breiter ausgebildet als das zweite und das dritte Lagerteil 32, 33, wobei es diese z.B. beidseitig überragt.

Außerdem ist beim Ausführungsbeispiel das erste Lagerteil 31 durch eine Lagerhülse 31b vorzugsweise hohlzylindrischen Querschnitts gebildet, die auf einem Lagerzapfen 19a der Triebwelle 19 drehfest angeordnet ist, z.B. mit Preßpassung auf dem Lagerzapfen 19a sitzt.

Das dritte Lagerteil 33 ist vorzugsweise ebenfalls eine Lagerhülse 33b, die drehfest im oder am sie tragenden Bauteil sitzt, hier am Deckel oder Anschlußteil 2d. Hierfür ist darin eine Lagerbohrung 34 für das runde dritte Lagerteil 33 vorgesehen, vorzugsweise mit einer durch eine Innenstufe gebildeten Schulterfläche 34a, die das dritte Lagerteil 33 axial nach außen begrenzt. Beim Ausführungsbeispiel erstreckt sich die Lagerbohrung 34 nach innen über die Teilungsfläche 2e zwischen dem Anschlußteil 2d und der Steuerscheibe 14 in letztere hinein, wobei vorzugsweise auch hier eine Schulterfläche 34b angeordnet ist, die das äußere Lagerteil 33 nach innen begrenzt, wodurch es axial formschlüssig positioniert ist. Bei dieser Ausgestaltung bildet die Lagerhülse 33b einen Zentrierzapfen für eine Zentrierung für die Steuerscheibe 14.

Die Ausführungsbeispiele nach Fig. 1 bis 9 und 11 bis 13 sind für eine Drehbewegung zwischen dem ersten und dem zweiten Lagerteil 31, 32 und für eine Kugelbewegung bzw. Kippbewegung zwischen dem zweiten und dem dritten Lagerteil 32, 33 eingerichtet. Um eine Drehbewegung um die Drehachse 21 zwischen dem zweiten und dem dritten Lagerteil 32, 33 zu verhindern, ist zwischen dem zweiten und dem dritten Lagerteil 32, 33 eine formschlüssig wirksame Drehsperrvorrichtung 35 mit einer Zapfenverbindung vorgesehen. Die Zapfenverbindung umfaßt einen von einem dieser beiden Lagerteile 32, 33 abstehenden und in ein Langloch 35a des anderen Lagerteils 32, 33 einfassenden Sperrzapfens 35b, wobei das Langloch 35a sich längs der Drehachse 21 erstreckt. Außerdem befinden sich das Langloch 35a und der Sperrzapfen 35b in der den Krümmungsmittelpunkt M enthaltenden Radialebene Er des betreffenden Lagerteils 32, 33. Infolgedessen ist eine Drehbewegung zwischen den Lagerteilen 32, 33 gesperrt, jedoch eine begrenzte allseitige Kippbewegung möglich, die die vorbeschriebenen Ausgleichsmaßnahmen erlaubt.

Der Sperrzapfen 35b kann durch einen runden Stift 35c gebildet sein, der in einer Bohrung in dem einen Lagerteil 32, 33 fest sitzt, z. B. eingepreßt ist, und mit seinem herausragenden, z.B. verdickten, Kopf in das Langloch 35a des anderen Lagerteils 32, 33 mit Bewegungsspiel einfaßt. Beim Ausführungsbeispiel ist das Stiftloch im zweiten Lagerteil 32 angeordnet und das Langloch 35a ist im dritten Lagerteil 33 angeordnet.

Der Sperrzapfen 35b ist vorzugsweise in der die Steueröffnungen 15 symmetrisch schneidenden Längsmittelebene E oder in der sich dazu rechtwinklig erstreckenden Längsmittelebene E1 angeordnet. Dies deshalb, weil die Summe der Kolbenkräfte eine in der Längsmittelebene E wirksame, resultierende Querkraft auf die Triebwelle 19 ausübt, die als Drehmoment eine geringe Biegung der Triebwelle 19 hervorrufen kann, die durch eine Kippbewegung in der Längsmittelebene E ausgeglichen wird. Diese Kippbewegung kann das kugelbewegliche Lager 25c in allen Querrichtungen problemlos ausführen, insbesondere dann, wenn das Langloch 35a sich in der Längsmittelebene E erstreckt oder auch dann, wenn es sich in der Längsmittelebene E1 befindet. In dieser Position erfolgt eine vorbeschriebene Kippbewegung um die sich quer erstreckende Mittelachse des Sperrzapfens 35b.

Das dritte Lagerteil 33 weist auf einer Seite eine axiale Einführungsnut 36 auf, die bezüglich ihren Querabmessungen A, B und ihrer Querschnittsform größer ausgebildet ist als die axiale Querschnittsgröße und -form des zweiten Lagerteils 32, so daß letzteres in einer winkelverdrehten Stellung, z.B. in einer um etwa 90° verdrehten Stellung, in die Einführungsnut 36 einführbar ist. Die axiale Länge der Einführungsnut 36 ist so groß bemessen, daß das zweite Lagerteil 32 in ihr in eine Zwischenstellung gemäß Fig. 5 schiebbar ist, in der die Krümmungsmittelpunkte der dritten und vierten Lagerfläche 32a, 33a im gemeinsamen Krümmungsmittelpunkt M liegen und sich deshalb überdecken. In dieser Stellung kann das zweite Lagerteil 32 in seine Endstellung gedreht werden, in der seine Längsmittelachse mit der Längsmittelachse des dritten Lagerteils 33 in etwa fluchtet. In dieser rückgedrehten Endstellung ist das zweite Lagerteil 32 durch den Hinterschnitt der kugelabschnittförmigen vierten Lagerfläche 33a axial formschlüssig im dritten Lagerteil 33 positioniert.

Beim Ausführungsbeispiel sind zwei Einführungsnuten 36 einander diametral gegenüberliegend und spiegelbildlich zueinander angeordnet, so daß das zweite Lagerteil 32 mittig in das dritte Lagerteil 33 eingeführt werden kann. Die einander gegenüberliegenden, im Querschnitt vorzugsweise entsprechend dem Durchmesser D des zweiten Lagerteils 32 gerundeten Grundflächen 36a der Einführungsnuten 36 sind vorzugsweise tangential zur kugelabschnittförmigen vierten Lagerfläche 33a ausgebildet, so daß sie mittig im dritten Lagerteil 33 auslaufen und in die kugelabschnittförmige vierte Lagerfläche 33a übergehen. Dies hat den besonderen Vorteil, daß das eingeführte zweite Lagerteil 32 an den den Einführungsnuten 36 axial gegenüberliegenden Abschnitten der kugelabschnittförmigen vierten Lagerfläche 33a Anschläge für die Einschubbewegung des zweiten Lagerteils 32 findet und zwar in der Zwischenstellung, in der die Krümmungsmittelpunkte einander decken und das zweite Lagerteil 32 drehbar ist. Hierdurch ist eine einfache und handhabungsfreundliche Montage gewährleistet. Das zweite Lagerteil 32 braucht nur bis zu einem Einschubanschlag bewegt und dann gedreht zu werden.

Beim Ausführungsbeispiel beträgt die Breite B der wenigstens einen Einführungsnut 36 etwa 1/2 bis 1/3 des Durchmessers D des zweiten Lagerteils 32. Bei dieser Größe sind neben der wenigstens einen Einführungsnut 36 hinreichend große Abschnitte der kugelabschnittförmigen vierten Lagerfläche 33a vorhanden, die den formschlüssigen Hintergriff in diese axiale Richtung gewährleisten.

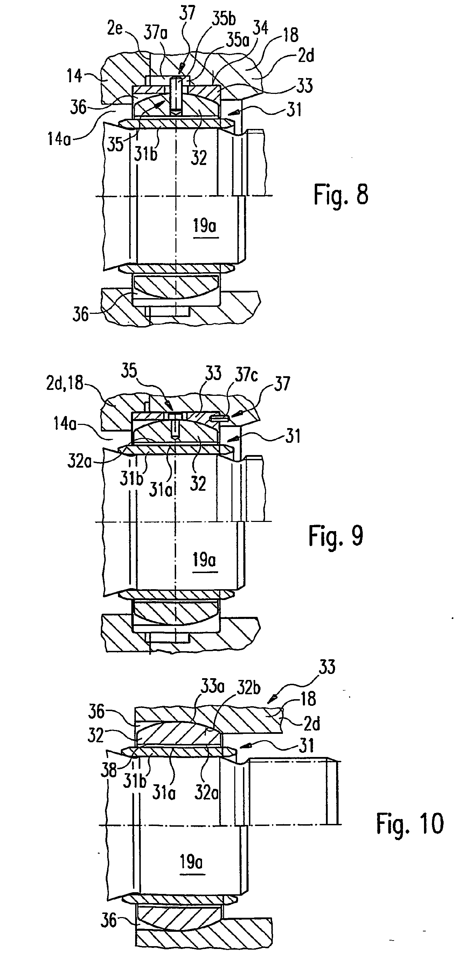

Zur Drehsicherung des dritten Lagerteils 33 in der Gehäusewand 18 kann eine Preßpassung zwischen dem Umfang des dritten Lagerteils 33 und der Wandung der Lagerbohrung 34 dienen. Beim Ausführungsbeispiel nach Fig. 8, bei dem gleiche oder vergleichbare Teile mit gleichen Bezugszeichen versehen sind, ist auch zur Drehsicherung des dritten Lagerteils 33 in der Gehäusewand 18 bzw. im Anschlußteil 2d eine formschlüssig wirksame Drehsperrvorrichtung 37 in Form einer Zapfenverbindung vorgesehen. Vorzugsweise dient hierzu der Sperrzapfen 35b, der das dritte Lagerteil 33 durchfaßt und in ein dem Langloch 35a im wesentlichen entsprechendes Langloch 37a in der Gehäusewand 18 einfaßt. Bei dieser Ausgestaltung ist nicht nur das zweite Lagerteil 32 sondern auch das dritte Lagerteil 33 gegen eine Verdrehung in der Umfangsrichtung formschlüssig an der Gehäusewand 18 positioniert.

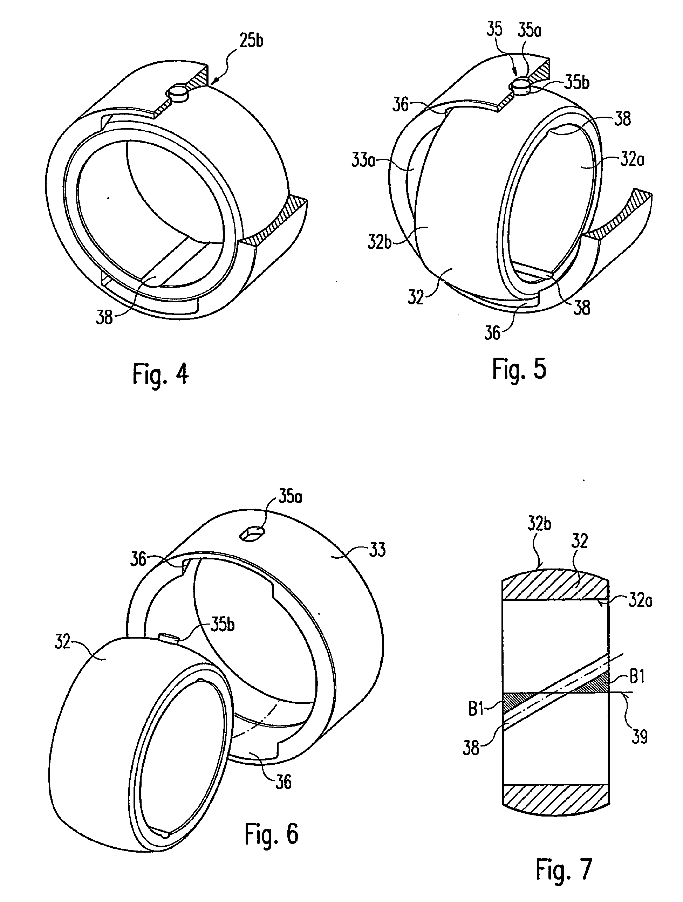

Die Montage des zweiten Lagerteils 32 und das Einführen des Sperrzapfens 35b in das Langloch 35a erfolgt dadurch, daß das zweite Lagerteil 32 in einer Position eingeführt wird, in der es mit dem Sperrzapfen 35b bezüglich des Langlochs 35a soweit verdreht ist (Fig. 6), daß der Sperrzapfen 35b in die Einführungsnut 36 einführbar ist. Wenn der Sperrzapfen 35b sich im Bereich des Langlochs 35a befindet, wird das zweite Lagerteil 32 rückgedreht, wobei der Sperrzapfen 35b in das Langloch 35a eintaucht. Dies ist aufgrund der kugelabschnittförmigen Form des zweiten Lagerteils 32 problemlos möglich.

Auch beim Ausführungsbeispiel nach Fig. 8 ist es bei einer entsprechenden Bemessung möglich, den verlängerten Sperrzapfen 35b so in die Langlöcher 35a, 37a einzuführen, daß das zweite Lagerteil 33 verdreht eingeführt wird und dann rückgedreht wird, wie es für das Ausführungsbeispiel gemäß Fig. 2 bis 6 bereits beschrieben worden ist. Es ist jedoch auch möglich, daß das Langloch 37a zu der Seite hin, von der das dritte Lagerteil 33 in die Lagerbohrung 34 einschiebbar ist, ausläuft. Bei dieser Ausgestaltung kann das dritte Lagerteil 33 mit dem darin montierten zweiten Lagerteil 32 in die Lagerbohrung 34 eingeschoben werden, wobei gleichzeitig auch der Sperrzapfen 35b in das Langloch 37a eingeführt wird. Beim Ausführungsbeispiel gemäß Fig. 8 ist dies von der Innenseite her möglich, da das Langloch 37a zur Teilungsfläche 2e zwischen der Gehäusewand 18 und der Steuerscheibe 14 ausläuft und dieses kugelbewegliche Drehgleitlager 25c vor dem Anbau der Steuerscheibe an die Gehäusewand 18 oder vor dem Anbau der Gehäusewand 18 an die Steuerscheibe 14 montierbar ist.

Beim Ausführungsbeispiel nach Fig. 9, bei dem gleiche oder vergleichbare Teile mit gleichen Bezugszeichen versehen sind, ist eine andere Ausgestaltung der Drehsperrvorrichtung 37 vorgesehen, wobei die Drehsperrvorrichtung 35 entsprechend Fig. 8 ausgebildet sein kann. Gemäß Fig. 9 ist die Drehsperrvorrichtung 37 ebenfalls durch eine Zapfenverbindung gebildet, jedoch ist diese bezüglich der Drehachse 21 nicht quer sondern achsparallel angeordnet und durch einen Sperrstift 37c gebildet, der im Bereich der Stufenfläche angeordnet ist und in einander gegenüberliegenden Löchern in der Gehäusewand 18 und im dritten Lagerteil 33 einfaßt.

Das Ausführungsbeispiel nach Fig. 10, bei dem gleiche oder vergleichbare Teile ebenfalls mit gleichen Bezugszeichen versehen sind, macht deutlich, daß es eines separaten dritten Lagerteils 33 nicht bedarf, wenn die innere vierte Lagerfläche 33a und die wenigstens eine Einführungsnut 36 direkt an der Gehäusewand 18 bzw. dem Anschlußteil 2d ausgebildet sind. Auch bei diesem Ausführungsbeispiel können Sperrvorrichtungen im Sinne der Fig. 8 oder 9 vorgesehen sein, wobei das Langloch 35a in der Gehäusewand 18 angeordnet sein kann (nicht dargestellt).

Bei der vorliegenden Kolbenmaschine oder Axialkolbenmaschine 1 befindet sich im Innenraum 3 Hydraulikflüssigkeit, z.B. Hydrauliköl, die im Funktionsbetrieb zum Schmieren der Gleitflächen 31a, 32a und vorzugsweise auch der Lagerflächen 32b, 33a dienen kann. Als Schmierflüssigkeit eignet sich eine wasserhaltige Schmierflüssigkeit besonders gut, die etwa 50 % Wasser und etwa 50 % Glykol enthält und unter der Bezeichnung HFC im Fachhandel bekannt ist.

Um die Zugänglichkeit der im Innenraum 3 befindlichen Schmierflüssigkeit insbesondere zum Drehgleitlager 25b zu gewährleisten, ist es vorteilhaft, zwischen der Steuerscheibe 14 und der Triebwelle 19 einen axialen Durchgang 14a vorzusehen, der den Zugang der Schmierflüssigkeit wenigstens zum Drehgleitlager 25b gewährleistet. Beim Ausführungsbeispiel weist die Steuerscheibe 14 ein Durchführungsloch auf, das die Triebwelle 19 mit einem Ringabstand umgibt. Der Durchmesser D1 des Durchgangslochs ist vorzugsweise größer als der Außendurchmesser des ersten Lagerteils 31 bzw. der Lagerhülse 31b, so daß ein ringförmiger Zugang zu den Gleitflächen 31a, 33a und vorzugsweise auch zu den Lagerflächen 32b, 33a gewährleistet ist.

Zur weiteren Verbesserung der Schmierung ist es vorteilhaft, in wenigstens einer der Gleitflächen 33a, 32a, hier in der inneren zweiten Gleitfläche 32a eine oder mehrere auf dem Umfang verteilt angeordnete Schmiernuten 38 vorzusehen, die sich axial oder schräg bzw. wendelförmig erstrecken können, wie es Fig. 2 bis 7 zeigen. Bei einer schrägen oder wendelförmigen Anordnung der wenigstens einen Schmiernut 38 ergibt sich auf jeder axialen Seite des zweiten Lagerteils 32 ein tragender Bereich B1, der von dem zugehörigen Rand der Schmiernut 38 und einer sich axial erstreckenden Gleitflächenlinie 39 begrenzt ist.

Bei den vorbeschriebenen Ausführungsbeispielen ist das Drehgleitlager 25c bezüglich der Triebwelle 19 ein sogenanntes Loslager, d. h., es besteht keine gegenseitige axiale Abstützung zwischen der Triebwelle 19 bzw. dem darauf fest angeordneten ersten Lagerteil 31 und dem zweiten Lagerteil 32. Dagegen ist diese axiale Abstützung zwischen dem dritten Lagerteil 33 und dem Gehäuse 2 bzw. der das Drehgleitlager 25b aufnehmenden Gehäusewand 18 vorhanden. Es gibt jedoch auch Einsatzfälle, bei denen eine axiale Abstützung zwischen dem ersten und dem zweiten Lagerteil 31, 32 in wenigstens einer axialen Richtung gewünscht ist. Dies läßt sich dadurch erreichen, daß das zweite Lagerteil 32 an einer oder an beiden Seiten jeweils von einer Schulter- bzw. Gleitfläche begrenzt ist, die an der Triebwelle 19 oder einem Anbauteil derselben angeordnet ist. Ein solches, in wenigstens einer axialen Richtung als Festlager ausgebildetes Drehgleitlager kann mit zwei Lagerteilen 31, 32 als Drehgleitlager 25b oder mit dem zweiten und dem dritten Lagerteil 32, 33 als kippbares Drehgleitlager 25c ausgebildet sein und somit in einer oder in beiden axialen Richtungen Axialkräfte aufzunehmen.

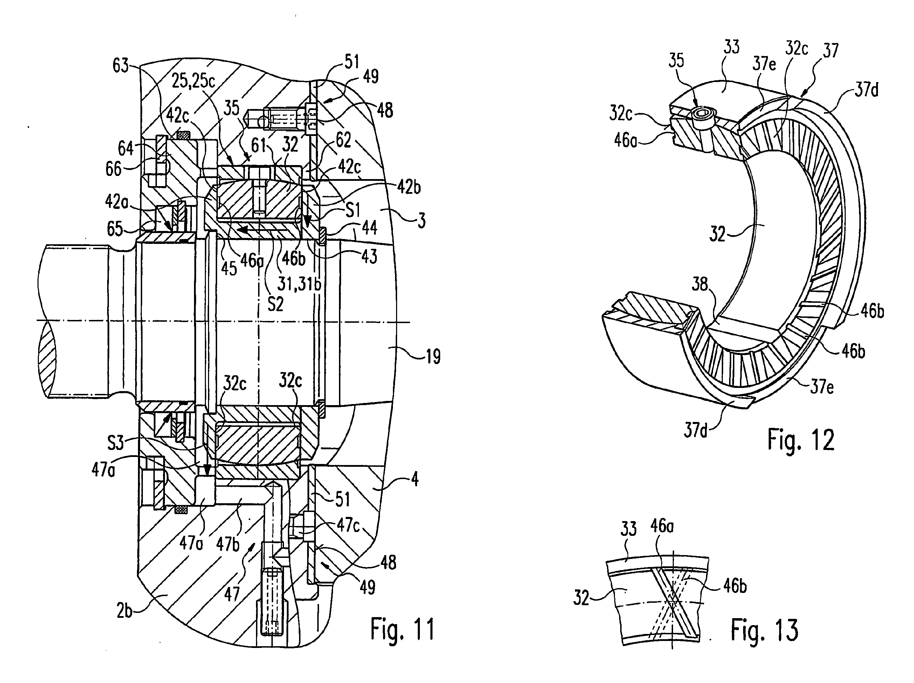

Beim Ausführungsbeispiel nach Fig. 11, bei dem gleiche oder vergleichbare Teile mit gleichen Bezugszeichen versehen sind, ist das Drehgleitlager 25c als in beide axialen Richtungen wirksames Festlager im Bereich des Gehäuses 2, hier im Gehäuseboden 2b, angeordnet, wobei es das im Anschlußteil 2d angeordnete Lager 25a oder vorzugsweise das im Gehäuseboden 2b angeordnete Lager 25 bilden kann, wie es Fig. 11 zeigt. Das zweite Lagerteil 32 ist an beiden Stirnseiten durch einen Stützflansch 42a, 42b mit Bewegungsspiel begrenzt, der axial an der Triebwelle 19 oder am ersten Lagerteil 31 fixiert ist. Beim Ausführungsbeispiel ist ein Stützflansch, hier der äußere Stützflansch 42a einteilig mit dem ersten Lagerteil 31 verbunden, wobei diese Teile einen winkelförmigen Ringkörper bilden, und der innere Stützflansch 42b weist ein koaxiales Loch 43 auf, mit dessen Lochrand er mit geringem Bewegungsspiel auf der Triebwelle 19 sitzt. Auf der dem Drehgleitlager 25c abgewandten Seite kann der Stützflansch 42b durch eine Triebwellenschulter 44 axial abgestützt sein, die beim Ausführungsbeispiel durch einen Federring gebildet ist, der in einer Ringnut in der Triebwelle 19 sitzt. Das erste Lagerteil 31 erstreckt sich vorzugsweise bis zur ihm zugewandten Fläche des zweiten Stützflansches 42b und es ist in der anderen axialen Richtung, hier nach außen, durch eine Triebwellenschulter 45 axial abgestützt, die als Flanschring einteilig von der Triebwelle 19 abstehen kann.

Zur Schmierung sind in den Schulter- bzw. Gleitflächen 42c der Stützflansche 42a, 42b (nicht dargestellt) oder in den Stirnflächen 32c des zweiten Lagerteils 32 jeweils eine oder mehrere auf dem Umfang verteilt angeordnete und von innen nach außen verlaufende Schmiernuten 46a, 46b vorgesehen, die radial innen mit einer Schmiermittelzuführungsleitung und radial außen mit einer Schmiermittelabführungsleitung in Verbindung stehen und somit Teil eines Schmiermittelkreislaufs 47 sind, der im Betrieb der Kolbenmaschine von einem Schmiermittel durchströmt wird, z. B. von Hydrauliköl. Um die Strömung im Schmiermittelkreislauf 47 aufrecht zu erhalten, bedarf es keiner besonderen Schmiermittelpumpe. Das sich im Betrieb in den Schmiernuten 46a, 46b befindliche Schmiermittel erzeugt die Strömung im Kreislauf 47 selbsttätig aufgrund der auf das Schmiermittel wirksamen Fliehkraft. Der Schmiermittelkreislauf 47 kann z. B. mit dem Innenraum 3 des Gehäuses 2 verbunden sein.

Eine zusätzliche Förderwirkung auf das Schmiermittel läßt sich dann erreichen, wenn die Schmiernuten 46a, 46b geneigt sind, insbesondere die Schmiernuten 46a auf der einen Seite und die Schmiernuten 46b auf der anderen Seite gegensinnig zueinander geneigt sind. Es können die sich im drehenden Lagerteil, hier in den Stützflanschen 42a, 42b, befindlichen Schmiernuten 46a (nicht dargestellt) der Drehrichtung des drehenden Lagerteils entgegengesetzt geneigt sein oder die sich im nicht drehenden Lagerteil, hier im zweiten Lagerteil 31, befindlichen Schmiernuten 46a, 46b in der Drehrichtung geneigt sind. Die Neigung kann auch spiralförmig sein. Bei diesen Ausgestaltungen wird eine forcierte Förderwirkung auf das Schmiermittel durch den Kontakt zwischen den Gleitflächen, hier den Stützflanschen 42a, 42b, und den sich in den Schmiernuten 46a, 46b befindlichen Schmiermittelsäulen erzeugt. Beim Ausführungsbeispiel, bei dem die Schmiernuten 46a, 46b im nichtdrehenden zweiten Lagerteil 32 angeordnet sind, wird die forcierte Förderwirkung durch den Kontakt erzeugt, den die Gleitflächen 42c des durch die Stützflansche 42a, 42b gebildeten drehenden ersten Lagerteils 31 erzeugt.

Beim Ausführungsbeispiel sind auf beiden Seiten des zweiten Lagerteils 32 angeordnete und zueinander gehörige Schmiernuten 46a, 46b mit der wenigstens einen Schmiernut 38 verbunden, die sich in der Außenmantelfläche des ersten Lagerteils 31 oder in der Innenmantelfläche des zweiten Lagerteils 32 befinden kann und sich dabei axial erstrecken kann, wie es z. B. Fig. 4 und 5 zeigen, oder schräg erstrecken kann, wie es Fig. 7 beispielsweise zeigt. Bei einem schrägen Verlauf der Schmiernut 38 wird die forcierte Förderwirkung auch im Bereich der Schmiernut 38 erzeugt. Die Förderwirkung wird durch den Kontakt erzeugt, den die dem Schmiermittel in der wenigstens einen Schmiernut 38 benachbarte Gleitfläche auf das Schmiermittel ausübt. Dabei sind die durch die gerade Schmiernut 38 miteinander verbundenen Schmiernuten 46a, 46b oder die durch eine schräge Schmiernut 38 miteinander verbundenen Schmiernunten 46a, 46b und auch die schräge Schmiernut 38 so ausgerichtet, daß die Förderwirkung in einander folgende Richtungen wirksam ist und sich eine in den Schmiernutenabschnitten 46b, 38, 46a durchgehende Förderwirkung ergibt. Im Betrieb tritt dann das Schmiermittel am radial äußeren Ende der Schmiernut oder Schmiernuten auf der einen Seite ein und am radial äußeren Ende der Schmiernut oder Schmiernuten auf der anderen Seite aus. Der axiale Verlauf der Förderwirkung bzw. der Förderrichtung nach außen oder nach innen ist abhängig von der Drehrichtung der Triebwelle 19 bzw. des ersten Lagerteils 31.

Beim Ausführungsbeispiel ist der Schmiermittelkreislauf 47 dadurch gebildet, daß die innenseitigen Schmiermittelnuten 46b radial außen zum Innenraum 3 offen sind. Die außenseitigen Schmiernuten 46a sind ebenfalls radial außen offen und sie können durch einen nicht dargestellten Schmiermittelkanal ebenfalls mit dem Innenraum 3 verbunden sein.

Fig. 11 zeigt eine Ausgestaltung, bei der in den Schmiermittelkreislauf 47 zusätzlich eine Schwenklagerschmierung für eine an sich bekannte schwenkbare Schrägscheibe 4 einbezogen ist. Bei dieser Ausgestaltung münden die Schmiermittelnuten 46a radial außen in einen vorzugsweise ringförmigen Spalt oder Schmiermittelkanalabschnitt 47a, von dem sich im Gehäuseboden 2b ein weiterführender Schmiermittelkanal 47b z. B. winkelförmig zur Gleitlagerfläche 48 eines Schwenklagers 49 für die bei diesem Ausführungsbeispiel schwenkbar gelagerte Schrägscheibe 4 erstreckt und dabei eine Lagerschale 51 des Schwenklagers 49 durchsetzt. Das bezüglich der Drehachse 7 der Triebwelle 19 auf der anderen Seite der Kolbenmaschine 1 angeordnete Schwenklager 49 kann in gleicher Weise an den Schmiermittelkreislauf 47 angeschlossen sein, was aus Vereinfachungsgründen nicht dargestellt ist.

Beim Ausführungsbeispiel sind die Strömungsrichtungen der Kreislaufströmung im Bereich des Drehgleitlagers 25c ausgehend von den Öffnungen der Schmierkanäle 46b zunächst radial einwärts dann axial auswärts und dann radial auswärts gerichtet, siehe S1, S2, S3.

Fig. 13 zeigt die einander entgegengesetzt geneigten Schmiernuten 46a, 46b auf beiden Seiten des zweiten Lagerteils 32.

Beim Ausführungsbeispiel nach Fig. 12 ist eine axial wirksame Drehsicherung 37 dadurch gebildet, daß vom Ringkörper des dritten Lagerteils 33 ein oder mehrere z. B. zwei einander gegenüberliegende Segmente 37d axial vorragen, die mit mittelbar oder unmittelbar am Gehäuse 2 bzw. Gehäuseboden 2b angeordneten Positionierausnehmungen, in die sie einfassen oder ein oder mehrere Positionierzapfen, die in die wenigstens eine, zwischen zwei Segmenten vorhandene Ausnehmung 37e einfassen, zwecks Drehsicherung formschlüssig zusammenwirken.

Beim Ausführungsbeispiel sitzt das Drehgleitlager 25c mit seinem dritten Lagerteil 33 in einer Lagerbohrung 61, die innenseitig eine Anschlagschulter 62 für das dritte Lagerteil 33 aufweist und nach außen stufenförmig erweitert ist, wobei in der größeren Bohrungsstufe 63 ein Verschlußring 64 mit einer Ringdichtung 65 für die Triebwelle 19 eingesetzt und durch einen Sicherungsring 66 axial gesichert ist.

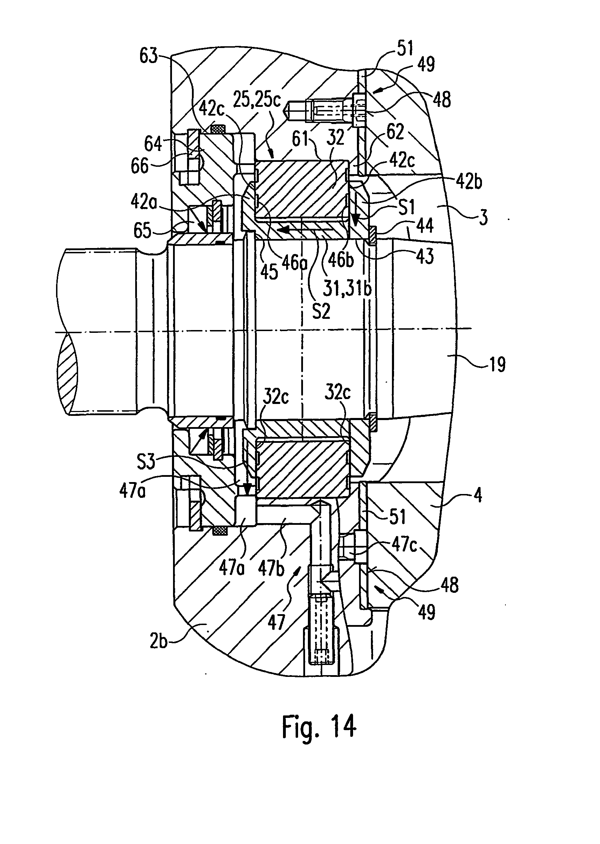

Beim Ausführungsbeispiel nach Fig. 14, bei dem gleiche oder vergleichbare Teile ebenfalls mit gleichen Bezugszeichen versehen sind, ist eine axiale Abstützung des zweiten Lagerteils 32 gemäß Fig. 11 bei einem Drehgleitlager 25c verwirklicht, das nicht kugelbeweglich ist, und dessen äußeres zweites Lagerteil 32 zylindrisch ausgebildet ist und in einer angepaßten Lagerbohrung 61 z. B. im Gehäuseboden 2b eingesetzt ist. Im übrigen - einschließlich der Anordnung und Ausgestaltung der Stützflansche 42a, 42b und der Schmiernuten 46a, 46b - entspricht die Ausgestaltung nach Fig. 14 der nach Fig. 11, worauf im vollen Umfang Bezug genommen wird und deshalb eine erneute Beschreibung unterbleiben kann.

## Patentansprüche

1. Drehgleitlager (25c), insbesondere für eine Triebwelle (19) einer Kolbenmaschine, vorzugsweise einer Axialkolbenmaschine (1), das ein inneres erstes Lagerteil (31) mit einer Mantelfläche (31a) und ein äußeres zweites Lagerteil (32) mit einer Innenmantelfläche (32a) aufweist,
wobei das äußere Lagerteil (32) das innere Lagerteil (31) umgibt,
wobei in der Mantelfläche (31a) des inneren ersten Lagerteils (31) und/oder in der Innenmantelfläche (32a) des äußeren zweiten Lagerteils (32) wenigstens eine etwa axial durchgehend verlaufende, erste Schmiernut (38) vorgesehen ist,
wobei einem der beiden Lagerteile (31) auf einer oder auf beiden Seiten eine Stützschulter (42a, 42b) mit einer Gleitfläche (42c) zugeordnet ist, an der das andere Lagerteil (32) mit seiner ihr zugewandten Seitenfläche (32c) axial gestützt ist,
**dadurch gekennzeichnet,**
**daß** jeweils in der Gleitfläche (42c) oder in der daran gestützten Seitenfläche (32c) wenigstens eine etwa radial verlaufende zweite Schmiernut (46a, 46b) angeordnet ist, daß die Schmiernuten (46a, 46b, 38) im einander zugewandten Bereich miteinander in Verbindung stehen, und daß auf wenigstens einer Seite des ersten Lagerteils (31) oder des zweiten Lagerteils (32) die wenigstens eine Schmiernut (46a, 46b) in eine Umfangsrichtung geneigt ist.

2. Drehgleitlager nach Anspruch 1,
**dadurch gekennzeichnet,**
**daß** auf beiden Seiten der Lagerteile (31, 32) Schmiernuten (46a, 46b) angeordnet sind, die zueinander entgegengesetzt geneigt sind.

3. Drehgleitlager nach einem der vorherigen Ansprüche,
**dadurch gekennzeichnet,**
**daß** die erste Schmiernut (38) schräg verläuft.

4. Drehgleitlager nach einem der vorherigen Ansprüche,
**dadurch gekennzeichnet,**
**daß** die Schmiernuten (46a, 46b, 38) Teil eines Strömungskreislaufs (47) sind, der vorzugsweise mit dem Innenraum (3) der Kolbenmaschine verbunden ist.

5. Drehgleitlager nach einem der vorherigen Ansprüche,
**dadurch gekennzeichnet,**
**daß** die oder eine der beiden Stützschultern (42a) einteilig mit dem einen Lagerteil, insbesondere dem ersten Lagerteil (31), verbunden ist.

6. Drehgleitlager nach einem der vorherigen Ansprüche,
**dadurch gekennzeichnet,**
**daß** eine Stützschulter (42b) durch eine separate Ringscheibe gebildet ist, die vorzugsweise auf der Triebwelle (19) sitzt.

7. Drehgleitlager nach einem der vorherigen Ansprüche,
**dadurch gekennzeichnet,**
**daß** das äußere Lagerteil (32) an seinem Außenumfang mit einer kugelabschnittförmigen dritten Lagerfläche (32b) ausgebildet ist, mit der es begrenzt kugelbeweglich in einem dritten Lagerteil (33) mit einer kugelabschnittförmigen inneren vierten Lagerfläche (33a) gelagert ist, die die dritte Lagerfläche (32d) umgibt, und daß auf einer Seite des dritten Lagerteils (33) zumindest eine Einführungsnut (36) angeordnet ist, in der das zweite Lagerteil (32) in einer winkelverdrehten Stellung bis in eine Stellung in das dritte Lagerteil (33) einführbar ist, in der die Krümmungsmittelpunkte (M) der dritten und vierten Lagerfläche (32b, 33a) einander im wesentlichen decken.

8. Drehgleitlager nach Anspruch 7,
**dadurch gekennzeichnet,**
**daß** zwei Einführungsnuten (36) einander gegenüberliegend angeordnet sind.

9. Drehgleitlager nach Anspruch 8,
**dadurch gekennzeichnet, daß** die Grundflächen (36a) der Einführungsnuten (36) tangential in die kugelabschnittförmige vierte Lagerfläche (33a) auslaufen.

10. Drehgleitlager nach einem der Ansprüche 7 bis 9,
**dadurch gekennzeichnet,**
**daß** die Breite (B) der Einführungsnut (36) etwa 1/3 bis 1/2 des Durchmessers (D) des zweiten Lagerteils (32) beträgt und die Breite (b) des zweiten Lagerteils (32) wenigstens unter Berücksichtigung eines Bewegungsspiels kleiner ist als die Breite (B) der Einführungsnut (36).

11. Drehgleitlager nach einem der Ansprüche 7 bis 10,
**dadurch gekennzeichnet,**
**daß** zwischen dem zweiten und dem dritten Lagerteil (32, 33) eine Drehsperrvorrichtung (35) angeordnet ist.

12. Drehgleitlager nach einem der Ansprüche 7 bis 11,
**dadurch gekennzeichnet,**
**daß** die Drehsperrvorrichtung (35) durch eine Zapfenverbindung zwischen dem zweiten und dem dritten Lagerteil (32, 33) gebildet ist und ein an dem einen Lagerteil (32) befestigter Sperrzapfen (35b) mit axialem Bewegungsspiel in eine vorzugsweise durch ein axiales Langloch (35a) gebildete Ausnehmung im anderen Lagerteil (33) einfaßt.

13. Drehgleitlager nach einem der Ansprüche 7 bis 12,
**dadurch gekennzeichnet,**
**daß** das dritte Lagerteil (33) ein hülsenförmiges Lagerteil ist, das in einer Lagerbohrung (34) eines zusätzlichen Lagerteils sitzt.

14. Drehgleitlager nach Anspruch 13,
**dadurch gekennzeichnet,**
**daß** das zusätzliche Lagerteil durch ein Anschlußteil (2d) einer Kolbenmaschine, insbesondere einer Axialkolbenmaschine (1), gebildet ist.

15. Drehgleitlager nach Anspruch 14,
**dadurch gekennzeichnet,**
**daß** das hülsenförmige Lagerteil innenseitig durch eine Steuerscheibe (14) begrenzt ist, die an der Innenseite des Anschlußteils (2d) angeordnet ist.

16. Drehgleitlager nach Anspruch 14 oder 15,
**dadurch gekennzeichnet,**
**daß** an der Innenseite des Anschlußteils (2d) eine Steuerscheibe (14) angeordnet ist, wobei in der Steuerscheibe (14), oder zwischen der Steuerscheibe (14) und einer das erste Lagerteil (31) tragenden Triebwelle (19) ein axialer Durchgang (14a) für eine Schmierflüssigkeit vorgesehen ist.

## Claims

1. Rotary plain bearing (25c), particularly for a drive shaft (19) of a piston machine, and preferably an axial-piston machine (1), which has an inner first bearing element (31) having a circumferential surface (31a) and an outer second bearing element (32) having an inner circumferential surface (32a), the outer bearing element (32) surrounding the inner bearing element (31),
wherein at least one first lubricating groove (38) which extends through continuously and approximately axially is provided in the circumferential surface (31a) of the inner first bearing element (31) and/or in the inner circumferential surface (32a) of the outer second bearing element (32),
wherein one of the two bearing elements (31) has associated with it, on one or both sides, a support shoulder (42a, 42b) having a slide face (42c) against which the other bearing element (32) is supported axially by its side face (32c) adjacent the support shoulder (42a, 42b),
**characterised in that**
at least one approximately radially extending second lubricating groove (46a, 46b) is arranged in the slide face (42c) or in the side face (32c) supported thereagainst,
**in that** the lubricating grooves (46a, 46b, 38) are connected to one another in the region where they are mutually adjacent, and
**in that** the at least one lubricating groove (46a, 46b) is inclined in a circumferential direction on at least one side of the first bearing element (31) or of the second bearing element (32).

2. Rotary plain bearing according to claim 1, **characterised in that** lubricating grooves (46a, 46b) which are inclined in opposite directions to one another are arranged on the two sides of the bearing elements (31, 32).

3. Rotary plain bearing according to one of the foregoing claims, **characterised in that** the first lubricating groove (38) extends obliquely.

4. Rotary plain bearing according to one of the foregoing claims, **characterised in that** the lubricating grooves (46a, 46b, 38) are part of a flow circuit (47) which is preferably connected to the interior (3) of the piston machine.

5. Rotary plain bearing according to one of the foregoing claims, **characterised in that** the or one of the two support shoulders (42c) is connected in one piece to one bearing element, and in particular to the first bearing element (31).

6. Rotary plain bearing according to one of the foregoing claims, **characterised in that** a support shoulder (42b) is formed by a separate annular disc which is preferably mounted on the drive shaft (19).

7. Rotary plain bearing according to one of the foregoing claims, **characterised in that** the outer bearing element (32) is formed to have, on its outer circumference, a third bearing surface (32b) in the form of a section of a sphere, by which it is mounted to have limited mobility as in a ball-joint in a third bearing element (33) having an inner fourth bearing surface (33a) in the form of a section of a sphere which surrounds the third bearing surface (32d), and **in that** there is arranged on one side of the third bearing element (33) at least one insertion groove (36) at which the second bearing element (32) can be inserted in the third bearing element (33), in an angularly rotated position, to a position at which the centres of curvature (M) of the third and fourth bearing surfaces (32b, 33a) substantially coincide with one another.

8. Rotary plain bearing according to claim 7, **characterised in that** two insertion grooves (36) are arranged in opposite positions to one another.

9. Rotary plain bearing according to claim 8, **characterised in that** the floor faces (36a) of the insertion grooves (36) run tangentially into the fourth bearing surface (33a) in the form of a section of a sphere.

10. Rotary plain bearing according to one of claims 7 to 9, **characterised in that** the width (B) of the insertion groove (36) is approximately 1/3 to 1/2 of the diameter (D) of the second bearing element (32) and the width (b) of the second bearing element (32) is, at least allowing for clearance for movement, smaller than the width (B) of the insertion groove (36).

11. Rotary plain bearing according to one of claims 7 to 10, **characterised in that** a rotation-blocking arrangement (35) is arranged between the second and third bearing elements (32, 33).

12. Rotary plain bearing according to one of claims 7 to 11, **characterised in that** the rotation-blocking arrangement (35) is formed by a spigot connection between the second and third bearing elements (32, 33) and a blocking spigot (35b) fastened to one bearing element (32) engages, with axial clearance for movement, in an opening in the other bearing element (33) which is preferably formed by an axial slotted hole (35a).

13. Rotary plain bearing according to one of claims 7 to 12, **characterised in that** the third bearing element (33) is a sleeve-like bearing element which is seated in a bearing bore (34) in an additional bearing element.

14. Rotary plain bearing according to claim 13, **characterised in that** the additional bearing element is formed by a connecting part (2d) of a piston machine, and in particular of an axial-piston machine (1).

15. Rotary plain bearing according to claim 14, **characterised in that** the sleeve-like bearing element has a limit set for it on the inner side by a control disc (14) which is arranged on the inside of the connecting part (2d).

16. Rotary plain bearing according to claim 14 or 15, **characterised in that** a control disc (14) is arranged on the inside of the connecting part (2d), an axial through-passage (14a) for a lubricant liquid being arranged in the control disc (14) or between the control disc (14) and a drive shaft (19) carrying the first bearing element (31).

## Revendications

1. Palier lisse de rotation (25c), en particulier pour un arbre d'entraînement (19) d'une machine à pistons, de préférence d'une machine à pistons axiaux (1), qui comprend une première partie de palier intérieure (31) pourvue d'une surface enveloppe (31a) et une seconde partie de palier extérieure (32) pourvue d'une surface enveloppe intérieure (32a), la partie de palier extérieure (32) entourant la partie de palier intérieure (31),
dans lequel, dans la surface enveloppe (31a) de la première partie de palier intérieure (31) et/ou dans la surface enveloppe intérieure (32a) de la seconde partie de palier extérieure (32), il est prévu au moins une première gorge de lubrification (38) qui s'étend approximativement axialement en continu,
dans lequel un épaulement d'appui (42a, 42b) pourvu d'une surface de glissement (42c) est associé à l'une des deux parties de palier (31) sur un côté ou sur les deux côtés, surface de glissement sur laquelle s'appuie axialement l'autre partie de palier (32) par sa surface latérale (32c) tournée vers celle-ci,
**caractérisé en ce que**
dans la surface de glissement (42c) ou dans la surface latérale (32c) appuyée sur celle-ci, il est prévu au moins une seconde gorge de lubrification (46a, 46b) s'étendant approximativement radialement,
**en ce que** les gorges de lubrification (46a, 46b, 38) sont en communication l'une avec l'autre dans des zones tournées l'une vers l'autre, et
**en ce que** sur au moins un côté de la première partie de palier (31) ou de la seconde partie de palier (32), ladite au moins une gorge de lubrification (46a, 46b) est inclinée dans une direction périphérique.

2. Palier lisse de rotation selon la revendication 1,
**caractérisé en ce que**
des gorges de lubrification (46a, 46b) sont ménagées sur les deux côtés des parties de palier (31, 32), qui sont inclinées en sens opposés l'une par rapport à l'autre.

3. Palier lisse de rotation selon l'une quelconque des revendications précédentes,
**caractérisé en ce que**
la première gorge de lubrification (38) s'étend en oblique.

4. Palier lisse de rotation selon l'une quelconque des revendications précédentes,
**caractérisé en ce que**
les gorges de lubrification (46a, 46b, 38) font partie d'un circuit d'écoulement (47) qui est de préférence en communication avec l'espace intérieur (3) de la machine à pistons.

5. Palier lisse de rotation selon l'une quelconque des revendications précédentes,
**caractérisé en ce que**
l'épaulement ou l'un des deux épaulements d'appui (42a) est relié d'un seul tenant à l'une des parties de palier, en particulier à la première partie de palier (31).

6. Palier lisse de rotation selon l'une quelconque des revendications précédentes,
**caractérisé en ce que**
un épaulement d'appui (42b) est formé par une rondelle annulaire séparée qui repose de préférence sur l'arbre d'entraînement (19).

7. Palier lisse de rotation selon l'une quelconque des revendications précédentes,
**caractérisé en ce que**
sur sa périphérie extérieure la partie de palier extérieure (32) est réalisée avec une troisième surface de palier (32b) en forme de calotte sphérique, par laquelle elle est montée mobile à la manière d'une genouillère sphérique à mobilité limitée dans une troisième partie de palier (33) pourvue d'une quatrième surface de palier intérieure (33a) en forme de calotte sphérique qui entoure la troisième surface de palier (32d),
et **en ce que** sur un côté de la troisième partie de palier (33) est ménagée au moins une gorge d'introduction (36) dans laquelle la seconde partie de palier (32) est susceptible d'être introduite dans une position tournée d'un angle, jusque dans une position dans la troisième partie de palier (33) dans laquelle les centres de courbure (M) de la troisième et de la quatrième surface de palier (32b, 33a) se chevauchent sensiblement.

8. Palier lisse de rotation selon la revendication 7,
**caractérisé en ce que**
il est prévu deux gorges d'introduction (36) l'une à l'opposé de l'autre.

9. Palier lisse de rotation selon la revendication 8,
**caractérisé en ce que**
les surfaces de fond (36a) des gorges d'introduction (36) se terminent tangentiellement dans la quatrième surface de palier (33a) en forme de calotte sphérique.

10. Palier lisse de rotation selon l'une quelconque des revendications 7 à 9,
**caractérisé en ce que**
la largeur (B) de la gorge d'introduction (36) est d'environ 1/3 à 1/2 du diamètre (D) de la seconde partie de palier (32), et la largeur (b) de la seconde partie de palier (32) est, au moins en prenant en compte un jeu de mouvement, inférieure à la largeur (B) de la gorge d'introduction (36).

11. Palier lisse de rotation selon l'une quelconque des revendications 7 à 10,
**caractérisé en ce que**
un dispositif de blocage antirotation (35) est agencé entre la seconde et la troisième partie de palier (32, 33).

12. Palier lisse de rotation selon l'une quelconque des revendications 7 à 11,
**caractérisé en ce que**
le dispositif de blocage antirotation (35) est formé par une liaison à tenon entre la seconde et la troisième partie de palier (32, 33), et un tenon de blocage (35b) fixé sur l'une des parties de palier (32) s'engage avec jeu de mouvement axial dans un évidement, formé de préférence par un trou oblong axial (35a), dans l'autre partie de palier (33).

13. Palier lisse de rotation selon l'une quelconque des revendications 7 à 12,
**caractérisé en ce que**
la troisième partie de palier (33) est une partie de palier en forme de douille qui repose dans un perçage de montage (34) d'une partie de palier supplémentaire.

14. Palier lisse de rotation selon la revendication 13,
**caractérisé en ce que**
la partie de palier supplémentaire est formée par une partie de raccordement (2d) d'une machine à pistons, en particulier d'une machine à pistons axiaux (1).

15. Palier lisse de rotation selon la revendication 14,
**caractérisé en ce que**
la partie de palier en forme de douille est limitée du côté intérieur par un disque de commande (14) qui est agencé sur le côté intérieur de la partie de raccordement (2d).

16. Palier lisse de rotation selon la revendication 14 ou 15,
**caractérisé en ce que**
un disque de commande (14) est agencé sur le côté intérieur de la partie de raccordement (2d), un passage axial (14a) pour un lubrifiant liquide étant prévu dans le disque de commande (14) ou entre le disque de commande (14) et un arbre d'entraînement (19) portant la première partie de palier (31).
